Europäisches Patentamt

European Patent Office

Office européen des brevets

(11) Publication number: **0 295 766**
A1

# (12) EUROPEAN PATENT APPLICATION

(21) Application number: 88303240.1

(51) Int. Cl.⁴: **B65G 53/46**

(22) Date of filing: **12.04.88**

(30) Priority: **15.06.87 GB 8713902**

(43) Date of publication of application:
**21.12.88 Bulletin 88/51**

(84) Designated Contracting States:
**DE NL**

(71) Applicant: **WESTINGHOUSE BRAKE AND
SIGNAL COMPANY LIMITED
Pew Hill
Chippenham Wiltshire(GB)**

(72) Inventor: **Small, Steven Alan
78 Wood Lane
Chippenham Wiltshire(GB)**

(74) Representative: **Newstead, Michael John et al
Page & Co. Temple Gate House Temple Gate
Bristol BS1 6PL(GB)**

(54) **Material feeding devices.**

(57) A device, a so-called drop out box, for feeding granular or particulate material supplied by a valve, comprises a chamber (10) having: a material inlet (11) for receiving such material from above; an inlet (12) for pressure air below the zone in the chamber (10) in which the material is received in the chamber (10); an outlet (13) for the material to be propelled from the chamber (10) by the pressure air, this outlet (13) also being below said zone; and a baffle (20) in the chamber above the pressure air inlet and the material outlet (13) to inhibit exiting of the material from the chamber (10) via the material inlet (11) of the chamber (10). In use as a drop out box fitted below a rotary valve, the baffle inhibits re-capturing of the material by the rotary valve.

FIG. 3.

EP 0 295 766 A1

## MATERIAL FEEDING DEVICES

This invention relates to devices for feeding granular or particulate material such as coal, sand, grain, foodstuff (such as tea) or plastics material in pellet form. This invention is particularly concerned with such a device that is a chamber, known as a drop out box, which is positioned between a rotary valve that delivers doses of material and a zone to which the doses of material are to be propelled by pressure air.

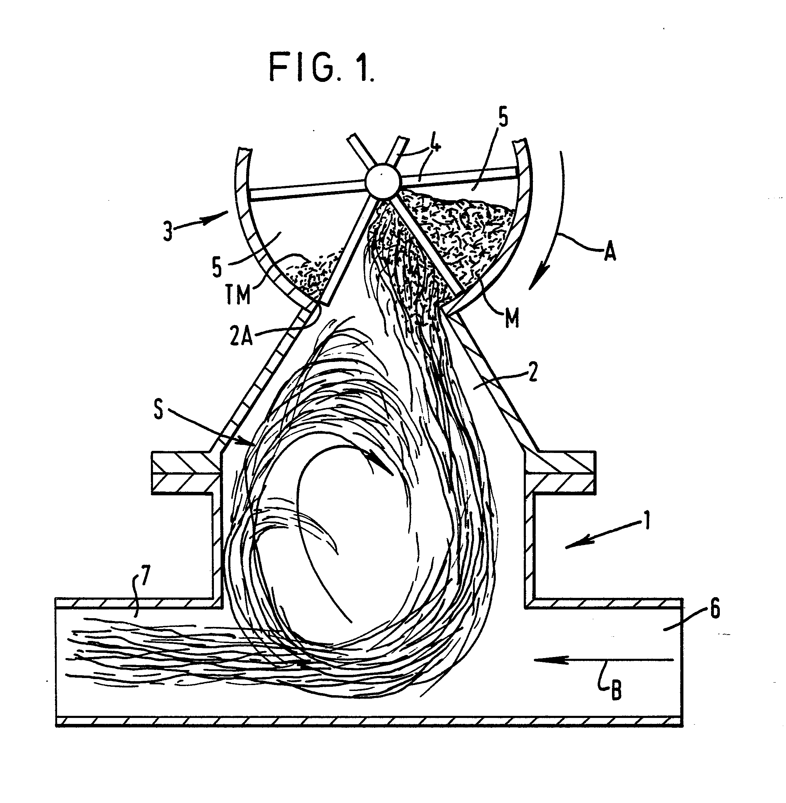

In Figure 1 of the accompanying drawings there is shown in diagrammatic sectional side view a chamber that is a drop out box 1 positioned below a delivery opening 2 of a rotary dose-dispensing valve 3. Within the valve 3 there are vanes 4 that define pockets 5 therebetween. Material M enters these pockets 5 from a supply hopper (not shown) disposed above the vanes and is carried round, by rotation of the vanes in the direction indicated by arrow A, to pass via the delivery opening 2 into the drop out box 1. Air under pressure supplied to the base of the box 1 at an inlet 6 (arrow B) serves to propel the material M out of the box via an outlet 7 to a zone to which it is desired the doses of material should be supplied.

A problem arises in use of equipment as illustrated in Figure 1. The pressure air entering the drop out box establishes an air/material swirl within the box, as indicated at S in Figure 1. An effect of this swirl is to inhibit the exiting of material from the pockets 5 and there is a tendency for some of the material to be re-captured as each vane leaves the delivery opening 2. One result of this is that chopping of the material can take place at the interface between the outer edge of each vane 4 and the edge 2A of the delivery opening 2. Although measures can be taken to combat this, and are taken at the top of the valve where the material is received from the supply hopper, it is clearly preferable that the effect should not occur. A further effect is that if material is trapped, as shown at TM in Figure 1, the true desired doses are not delivered.

According to the present invention there is provided a device for feeding granular or particulate material supplied by a valve, the device comprising a chamber having:-

a) a material inlet for receiving such material from above;

b) an inlet for pressure air below the zone in the chamber in which the material is received in the chamber;

c) an outlet for the material to be propelled from the chamber by the pressure air, this outlet also being below said zone; and

d) baffle means in the chamber above the pressure air inlet and the material outlet to inhibit exiting of the material from the chamber via the material inlet of the chamber.

It will be appreciated that where a chamber as just defined is a drop out box to be used in the manner described with reference to Figure 1, the effect of the baffle means within the chamber is to inhibit re-capturing of the material by the vanes of the rotary valve as the vanes leave the delivery opening of the valve.

For a better understanding of the invention, and to show how the same may be carried into effect, reference will now be made, by way of example, to the remaining Figures of the accompanying drawings, in which:-

Figure 2 is a sectional side view of a device for feeding granular or particulate material supplied by a valve, taken on line II-II of Figure 3,

Figure 3 is an end view of the device, and

Figure 4 is a view from above of part of the device.

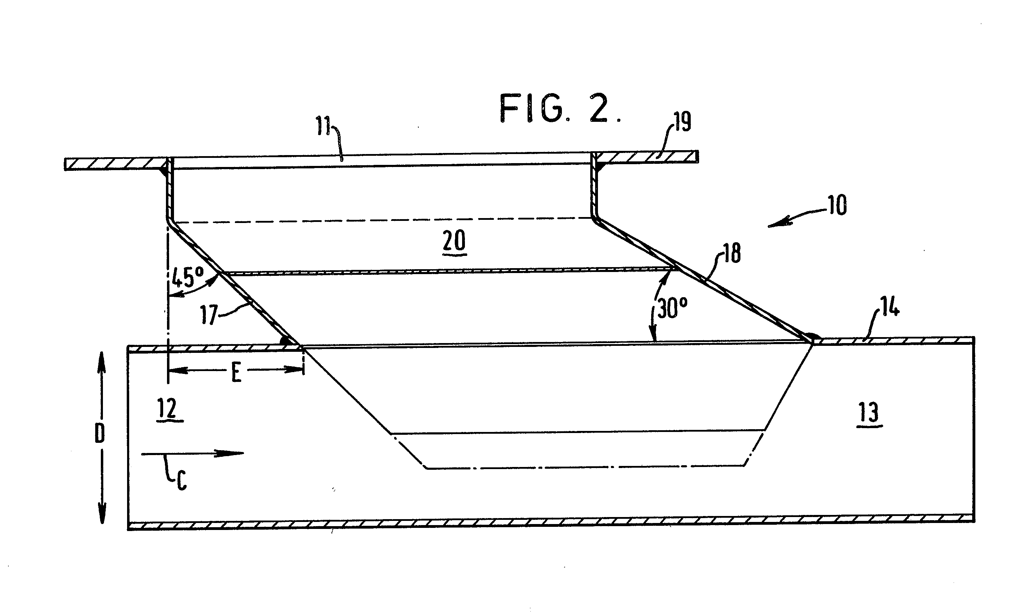

The device shown in Figures 2, 3 and 4 is a chamber that is a drop out box 10 that is intended to be positioned below a delivery opening of a rotary dose-dispensing valve not shown in these Figures but which could be as the valve 3 of Figure 1, and which would, therefore, have vanes defining pockets therebetween for delivering doses of material to the delivery opening. The drop out box 10, like the box 1 of Figure 1, has a material inlet 11 at its top for receiving material from above, a pressure air inlet 12 in its base and an air/material outlet 13 also in its base, in line with the pressure air inlet 12.

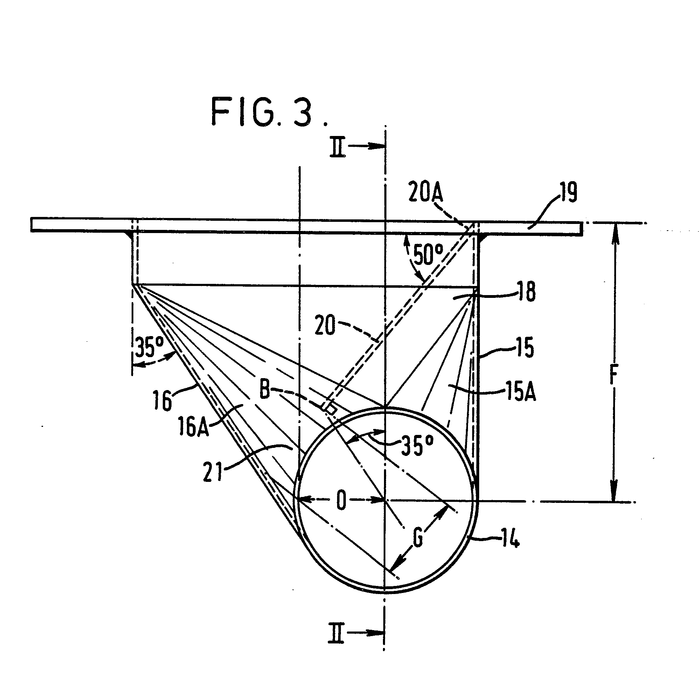

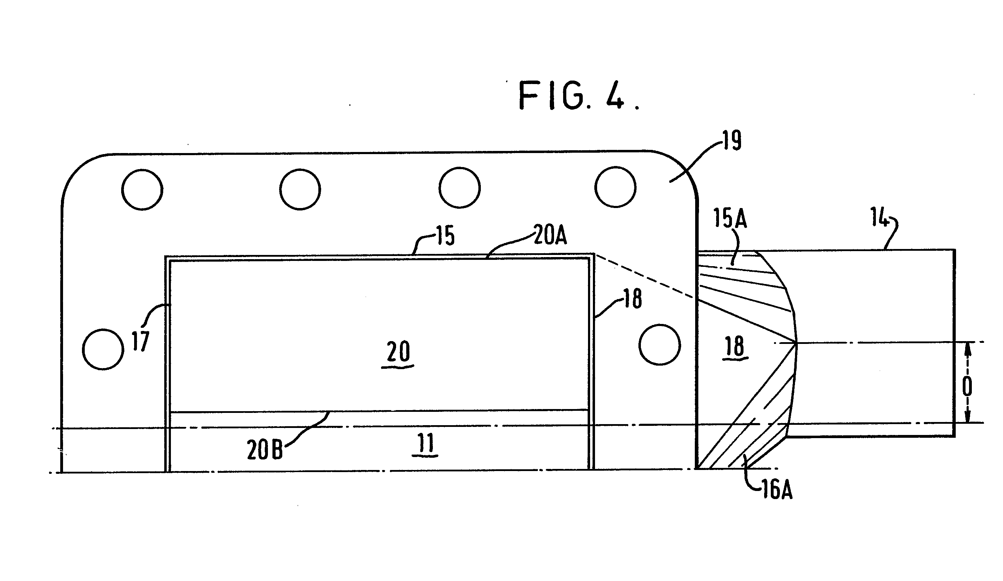

In the box 10 illustrated, the pressure air inlet 12 and the air/material outlet 13 are in a common pipe run 14 forming the base of the box 10. Above this pipe run 14 the box 10 has four walls, the upper edges of which define the material inlet 11, which is rectangular. The longer sides of the inlet 11 run parallel with the pipe run 14 and, as indicated by dimension 0 in Figures 3 and 4, the longer central axis of the inlet 11 is offset from the axis of the pipe run 14. To this end, the wall 15 of the box 10 which runs parallel with the pipe run 14 is vertical while the opposing wall 16 (which is also parallel with the pipe run 14) is inclined outwardly upwardly from the pipe run 14 over the major part of its height. The angle of this inclined part to the vertical is 35°. Both walls 15 and 16 include flaring portions 15A, 16A to mate the entry to the pipe run 14 to the somewhat larger inlet 11.

The remaining two walls, which run at right angles to the pipe run 14, also include inclined portions. The wall 17 which is closer to the pressure air inlet 12 includes a portion that is at 45° to the vertical, the upper end being upstream with respect to the pressure air flow in the pipe run 14. The wall 18 remote from the pressure air inlet 12 is at an angle of 60° to the vertical with, again, the upper end upstream with respect to the pressure air flow. The walls 16, 17 and 18 all terminate at their upper ends in vertical portions all of the same height, which together with the top of wall 15 are fastened to a generally rectangular flange member 19.

Within the box 10 there is a baffle 20. This baffle is an inclined imperforate plate the upper edge 20A of which is fast with and sealed to the upper edge of the vertical wall 15 of the box 10, that is one of the walls running parallel with the pipe run 14. The baffle 20 is inclined at an angle of 40° to the vertical and extends down into the box 10 to terminate such that its lower edge 20B is substantially at the level of the top of the pipe run 14, and some distance clear of the opposing wall 16. The angle between the vertical central plane of the pipe run and a plane passing through the centre of the pipe run 14 and containing the lower edge 20B of the baffle, is 35°. As the lower edge 20B of the baffle is clear of the wall 16 there is between the wall 16 and the lower edge of the baffle a throat 21 through which material can pass to enter the pipe run.

If D is the internal diameter of the pipe run 14, then it has been found that the following ratios are useful in optimizing the throughflow of material, where E is the distance from the outside of the vertical portion of wall 17 to the point where its inclined portion meets pipe run 14; F is the height of the top of baffle member 19 above the axis of the pipe run 14; and G is the distance from lower edge 20B of baffle 20 to wall 16:

$$E = 0.7 \times D$$
$$F = 1.5 \times D$$
$$G = 0.9 \times D$$

In use with the drop out box 10 connected, as shown for the box 1 in Figure 1, below a rotary valve dispensing doses of granular or particulate material such as coal, sand, grain, foodstuff (such as tea) or plastics material in pellet form, each dose enters the box 10 from above. Pressure air also enters the box 10 via the pressure air inlet 12, as indicated by arrow C. Doses of material drop from the rotary valve into the drop out box 10 to pass through the throat 21 between the baffle 20 and the opposing wall 16. Pressure air supplied at the inlet 12 propels the material from the box via the outlet 13, the inlet 12 and outlet 13 establishing a flow path for the pressure air and the material propelled thereby. Due to the presence of the baffle 20, air/material swirl within the drop out box 10, such as shown in Figure 1, is inhibited so that feed-back of material towards the valve is minimised and hence re-capturing of material by the valve is minimised.

Preferably the valve is operated such that material falling from the valve enters the drop-out box mainly on the throat 21 side of the box, rather than on the baffle 20 side, so that the major part at least of the material drops directly into the throat 21 and not onto the baffle 20.

## Claims

1. A device, for feeding granular or particulate material supplied by a valve, the device comprising a chamber having:-

a) a material inlet for receiving such material from above;

b) an inlet for pressure air below the zone in the chamber in which the material is received in the chamber;

c) an outlet for the material to be propelled from the chamber by the pressure air, this outlet also being below said zone; and

d) baffle means in the chamber above the pressure air inlet and the material outlet to inhibit exiting of the material from the chamber via the material inlet of the chamber.

2. A device as claimed in Claim 1, wherein the baffle means comprises an inclined plate that extends from an upper edge portion of one wall of the chamber down into the chamber and which terminates short of the opposite wall of the chamber so that a throat for material to pass through from the material inlet to the material outlet is defined between the lower edge of the plate and said opposite wall.

3. A device as claimed in Claim 2, wherein said one wall and said opposite wall extend along the direction of a flow path for pressure air and material propelled thereby established by the pressure air inlet and the material outlet.

4. A device as claimed in Claim 3, wherein said flow path is offset with respect to the material inlet.

5. A device as claimed in Claim 4, wherein said flow path is offset in the direction away from said opposite wall.

6. A device as claimed in Claim 5, wherein said one wall is vertical and said opposite wall has a portion that is inclined to the vertical.

7. A device as claimed in Claim 2, 3, 4, 5 or 6, wherein the baffle is inclined at an angle of 40° to the vertical.

8. A device as claimed in Claim 3 or any one of claims 4 to 7 as appendant directly or indirectly to Claim 3, wherein the chamber has two further walls that are transverse to said flow path, each of these walls including a portion that is inclined from an upper portion that is upstream with respect to said flow path to a lower portion that is downstream with respect to said flow path.

9. A device as claimed in Claim 8, wherein that one of said two walls that is the upstream wall of the two with respect to said flow path has its inclined portion at an angle of 45° to the vertical.

10. A device as claimed in Claim 8 or 9, wherein that one of said two walls that is the downstream wall of the two with respect to said flow path has its inclined portion at an angle of 60° to the vertical.

# FIG. 1.

# FIG. 2.

EP 0 295 766 A1

# FIG. 3.

# FIG. 4.

EP 0 295 766 A1

## DOCUMENTS CONSIDERED TO BE RELEVANT

EP 88303240.1

| Category | Citation of document with indication, where appropriate, of relevant passages | Relevant to claim | CLASSIFICATION OF THE APPLICATION (Int. Cl.4) |
|---|---|---|---|
| X | DE - B2 - 2 419 841 (C.SEEGER MASCHINENFABRIK) <br><br> * Totality * | 1-6 | B 65 G 53/46 |
| A | | 7-10 | |
| | ---- | | |

**TECHNICAL FIELDS SEARCHED (Int. Cl.4)**

B 65 G

The present search report has been drawn up for all claims

| Place of search | Date of completion of the search | Examiner |
|---|---|---|
| VIENNA | 22-09-1988 | PISSENBERGER |